# EUROPEAN PATENT APPLICATION

(11) **EP 4 699 424 A1**
(43) Date of publication of application: **25.02.2026**
(21) Application number: 24195107.8
(22) Date of filing: 19.08.2024
(51) Int. Cl.: A01B 59/00

(54) **TOP LINK ASSEMBLY FOR AN IMPLEMENT LINKAGE FOR ATTACHING AN IMPLEMENT, METHOD OF OPERATION, IMPLEMENT LINKAGE FOR ATTACHING AN IMPLEMENT, AND AGRICULTURAL MACHINE**

(71) Applicant: Kverneland Group Mechatronics BV, 2153 LR Nieuw-Vennep (NL)
(72) Inventor: KUGIS, Rinalds, 2153 LR Nieuw-Vennep (NL); D´HAENE, Maurice Johannes, 2153 LR Nieuw-Vennep (NL); TJALMA, Indra, 2153 LR Nieuw-Vennep (NL)
(74) Representative: Bittner, Thomas L.

(57) **Abstract**

The present invention refers to a top link assembly (20) for an implement linkage for attaching an implement, comprising: an actuator (21) switchable between a first and second operation state from a plurality of operation states, an actuator control device (24) configured to control power supply to the actuator (21); and an operation control device (25) having an operation control device input (27) for receiving electronic signals and an operation control device output (27) for sending electronic signals. With respect to the plurality of operations states, the first operation state is characterized by at least one first operation state parameter, the second operation state being different from the first operation state is characterized by at least one first operation state parameter, and the at least one second operation state parameter is different from the at least one first operation state parameter. The operation control device (25) is operable to (i) receive an electronic operation state setting signal through the operation control device input (27), the electronic operation state setting signal comprising a request for switching the actuator (21) to the second operation state, and (ii) in response to the request for switching, control operation of the actuator control device (24) for switching of the actuator (21) from the first operation state to the second operation state. Further, an implement linkage for attaching an implement, an agricultural machine, and a method for operating a top link assembly of an implement linkage are provided.

## Description

The present disclosure refers to a top link assembly for an implement linkage for attaching an implement, an implement linkage for attaching an implement, an agricultural machine, and a method for operating a top link assembly of an implement linkage for attaching an implement.

### Background

In agriculture, agricultural machines, in particular tractors or autonomous agricultural / self-propelled vehicles, are used for different tasks, for example for tillage, for spreading material, such as seeds or fertilizer, in a field, for harvesting or for transport. Accordingly, different devices (implement(s)) could be coupled to the work vehicle, such as plow, seeder, fertilizer spreader, baler, mower, attached forage harvester or transport trailer. The agricultural machines are therefore equipped with one or more implement linkages to which different implements can be attached. Such implement linkages may include a hitch for attaching e.g. a trailer or a baler, a rear three-point hitch on the rear of the work vehicle and / or a three-point hitch on the front of the agricultural machine, each for attachment to non-tiller coupled devices, e.g. mower, forage harvester, fertilizer spreader, seeder or plow. Also, the implement linkage may be applied for attaching a first implement to a second implement, thereby, providing implement-implement linkage.

In some type, the implement linkage comprises a top link which may be operable to adjust an angle of inclination and / or a height above ground of the implement attached by the implement linkage device. The top link may be provided as a mechanical top link which can be operated manually by a user, for example, by operating an adjustment screw. Further, a top link according to another type of device may comprise a hydraulic cylinder. The hydraulic cylinder is assigned a hydraulic flow device operable to provide flow of a hydraulic fluid into and out of the hydraulic cylinder, thereby, adjusting extension or length of the hydraulic cylinder. Furthermore, a top link according to another type of device may comprise an electric actuator or pneumatic actuator.

Document EP 3 569 871 A1 refers to a hydraulic circuit which provides relief pressure operation for a lift cylinder and / or top link cylinder in an implement linkage. A relief pressure control valve has a first position providing a connection between a variable displacement pump and one side of the hydraulic cylinder, and a second position providing a connection between that side of the hydraulic cylinder and a drain or reservoir. A connection carries an indication of the pressure of the hydraulic cylinder chamber as a load-sensing signal to control adjustment of the pump.

### Summary

It is an object of the present disclosure to provide a top link assembly for an implement linkage for attaching an implement, an implement linkage for attaching an implement, an agricultural machine, and a method for operating a top link assembly of an implement linkage for attaching an implement allowing for improved operation of the top link assembly.

For solving the problem, a top link assembly for an implement linkage for attaching an implement according to the independent claim 1 is provided. Further, an implement linkage for attaching an implement, and an agricultural machine are provided according to claim 13 and claim 14, respectively. Also, a method for operating a top link assembly of an implement linkage for attaching an implement according to claim 15 is provided. Additional embodiments are disclosed in dependent claims.

According to an aspect, a top link assembly for an implement linkage for attaching an implement is provided, comprising an actuator switchable between a first operation state and a second operation state from a plurality of operations states; an actuator control device configured to control power supply to the actuator; and an operation control device having an operation control device input and an operation control device output for sending and receiving electronic signals. With respect to the first and second operation state, the following is provided: the first operation state is characterized by at least one first operation state parameter; the second operation state, being different from the first operation sate, is characterized by at least one second operation state parameter; and the at least one second operation state parameter is different from the at least one first operation state parameter. The operation control device is operable to (i) receive an electronic operation state setting signal through the operation control device input, the electronic operation state setting signal comprising a request for switching the actuator to the second operation state characterized by the at least one second operation state parameter, and, (ii) in response to the request for switching the actuator, to control operation of the actuator control device for switching of the actuator from the first operation state to the second operation state.

According to another aspect, an implement linkage for attaching an implement is provided, the implement linkage comprising the top link assembly. According to a further aspect, an agricultural machine is provided, comprising the implement linkage.

According to still a further aspect, a method for operating a top link assembly of an implement linkage for attaching an implement is provided, the method comprising: providing an actuator switchable between a first operation state and a second operation state from a plurality of operations states; providing an actuator control device configured to control power supply to the actuator; and providing an operation control device having an operation control device input for receiving electronic signals and an operation control device output for sending electronic signals. With respect to the first and second operation state, the following is provided: the first operation state is characterized by at least one first operation state parameter; the second operation state, being different from the first operation sate, is characterized by at least one second operation state parameter; and the at least one second operation state parameter is different from the at least one first operation state parameter. The method is further comprising: receiving an electronic operation state setting signal through the operation control device input in the operation control device, the electronic operation state setting signal comprising a request for switching the actuator to the second operation state, and in response to the request for switching the actuator, controlling operation of the actuator control device for switching of the actuator from the first operation state to the second operation state.

The top link assembly comprising the operation control device which is operable to receive the electronic operation state setting signal indicating or comprising the request for switching the operation state of the actuator allows for improved operation of the top link assembly. The electronic operation state setting signal may provide for a control signal which is received in the operation control device and which may be configured to directly control the operation control device of the top link assembly for switching operation state of the actuator, each operation state being characterized by at least one operation state parameter controllable by the operation control device. Thereby, advanced controlling of the operation of the top link assembly can be easily implemented in different operation scenarios in the field.

The operation control device may be functionally connected to a data bus for sending and receiving electronic signals, for example, the electronic operation state setting signal. Control signals of different type and / or signal content may be transmitted over the data bus and received by the operation control device of the top link assembly through the operation control device input. Similarly, electronic signals of different type and / or signal content may be sent by the operation control device through the operation control device output via the data bus, for example, to other functional elements or components of an agricultural machine provided with the top link assembly. For example, the operation control device may transmit a control signal to some other functional element such as an operation control device of a tractor and / or an operation control device of an implement. By applying such mode of operation, the operation control device of the top link assembly is operable to directly control one or more operation functions of at least one of the tractor, and the implement.

Also, the data bus may be operable for sending and receiving electronic signals different from control signals, such as sensor signals.

The operation control device of the top link assembly may be provided as a functional component in a client-server network design provided in an agricultural machine. Within the client-server network the operation control device may be operable as at least one of a client device and a server device. Depending on the type of operation process running or implemented, the operation control device of the top link assembly may be receiving the request for switching the actuator of between different operation states, thereby, the operation control device being operable as a client device. In a different operation scenario, the operation control device of the top link assembly may be sending a control signal defining a request to another functional component such as, for example, the tractor and / or the implement also connected to the data bus, thereby, the operation control device being operable as a client device providing the request to the server device.

The actuator may be one of a hydraulic actuator such as a hydraulic cylinder, an electric actuator such as an electric motor, and a pneumatic actuator such as a pneumatic cylinder. Depending on the type of actuator, the actuator control device may comprise at least one of one or more hydraulic valves in case of the hydraulic actuator, a solenoid, an electric motor driver in case of the electric actuator, and one or more pneumatic valves in case of the pneumatic actuator.

The top link assembly may comprise more than one actuator, the at least two actuators being of the same or different type of actuator selected from hydraulic actuator, electric actuator, and pneumatic actuator.

The operation control device may be further operable to receive the electronic operation state setting signal from at least one of an implement operation control device of an implement, a tractor operation control device of a tractor, a telematics device, and a terminal application, wherein the at least one second operation state parameter is defined by at least one of the implement operation control device, the tractor operation control device, the telematics device, and the terminal application. In this embodiment the switching of the actuator of the top link assembly is performed in response to receiving the electronic operation state setting signal from either the tractor, the implement, the telematics device, or the terminal application. Such embodiment, for example, allows the tractor, the telematics device, and / or the implement to directly control operation of the top link assembly by submitting the control signal for switching operation state. The terminal application which for example may be operable for receiving user input may also be connected to the data bus commonly used by the operation control device of the top link assembly and the terminal application.

In some embodiment, the data bus may be implemented as an ISOBUS which is a standardized international communication protocol that allows agricultural and forestry equipment to communicate with each other. ISOBUS, for example, is described in ISO 11783.

The telematics device may be provided as an embedded system on board the implement or the tractor that wirelessly connects to cloud services or other agricultural machines over a cellular network. The telematics device may collect telemetry data from the tractor and / or implement, such as position, speed, engine data, connectivity quality, etc., from various subsystems over data and control busses. It may also provide in-machine connectivity via Wifi and Bluetooth and may implement an eCall function when applicable. The telematics device can be provided on the tractor or the implement. Also, it may be provided as a standalone telematics device. The telematics device may be a gateway.

The telematics device may be configured to facilitate collection, transmission, and / or processing of data related to an agricultural activity such as filed operation or work. The telematics device may be enabling real-time monitoring, automation, and / or controlling of agricultural processes by e.g., interfacing with sensors and agricultural equipment. The gateway can also relay instructions back to the machinery, ensuring seamless operation and / or data flow within an agricultural network.

The at least one first operation state parameter and the at least one second operation state parameter may be of an operation state parameter type selected from the following group: position of the actuator, extension of the actuator, motion of the actuator, angle of inclination of the actuator, internal force of an actuator component, internal pressure of a cylinder chamber, force externally provided by the actuator, and pressure externally provided by the actuator. At least one of the first operation state and the second operation state may be characterized by two or more operation state parameters of different type.

With respect to the position of the actuator, a spatial position may be provided for the actuator. Also, a relative position may be provided, for example, in relation to some other functional component or member of the implement linkage or some functional component or member of the tractor or the implement attached by the implement linkage.

With respect to the extension the actuator which may also be referred to as length of the actuator, parameter information regarding a length / extension of the actuator may be provided. With respect to the angle of inclination of the actuator, parameter information regarding an angle of inclination with respect to a ground on which an agricultural machine is moving may be provided. A pressure detected within a cylinder chamber of the actuator may be provided as an operation state parameter.

The at least one first operation state parameter and the at least one second operation state parameter may be different with respect to at least one of type of operation state parameter and value of operation state parameter. In some embodiment, it may be provided that the first and second operation state are characterized by an operation state parameter of the same type such as, for example, angle of inclination and / or pressure, but the at least one first operation state parameter and the at least one second operation state parameter are having a different operation state parameter value for the first operation state and the second operation state, respectively.

In some other embodiment, the at least one first operation state and the at least one second operation state are characterized by operation state parameters of different type. At least one of the type of operation state parameter and the value of operation state parameter with respect to the at least one second operation state parameter may be defined in the request for switching the actuator which is received in the operation control device of the top link assembly.

The top link assembly may comprise an actuator sensor device, the actuator sensor device being assigned to the actuator and operable to generate a sensor signal indicating a second operation state parameter value measured for the at least one second operation state parameter, wherein the operation control device is further operable to (i) receive the sensor signals and (ii) control operation of the actuator control device for switching of the actuator from the first operation state to the second operation state in dependence on or in response to the sensor signals.

In some embodiment, the actuator sensor device is operable to continuously generate sensor signals indicating the second operation state parameter value while the switching between the first and second operation state is conducted or performed.

The operation control device may further be operable to generate a switching state signal indicating a current second operation state parameter value measured for the at least one second operation state parameter while the switching of the actuator from the first operation state to the second operation state is in progress or still going on, and to provide the switching state signal to the operation control device output.

By means of the switching state signal, the operation control device of the top link assembly may be operable to provide information on the state of switching, for example, to the tractor operation control device and / or the implement operation control device. The switching state signal may be transferred through the data bus to which the operation control device and at least one of the tractor operation control device, and the implement operation control device may be connected.

The operation control device may further operable to (i) send the switching state signal, through the operation control device output, to at least one of the implement operation control device, the tractor operation control device, the telematics device, and the terminal application; (ii) receive a stop signal from at least one of the implement operation control device, the tractor operation control device, the telematics device, and the terminal application through the operation control device input; and (iii) stop switching of the actuator in response to receiving the stop signal. The stop signal received in the operation control device of the top link assembly provides for a request for stopping (further) switching. The stop signal providing for a (direct) control signals may be generated in at least one of the implement operation control device, the tractor operation control device, the telematics device, and the terminal application in response to receiving the switching state signal from the operation control device of the top link assembly, if the switching state signal is indicating that the actuator has been switched to the second operation state matching the request for switching sent from at least one of the implement operation control device, the tractor operation control device, the telematics device, and the terminal application to the operation control device of the top link assembly before.

In some embodiment, the operation control device of the top link assembly may by operable to continuously generate the switching state signal and sent the continuously generated switching state signal through the operation control device output to at least one of the implement operation control device, the tractor operation control device, the telematics device, and the terminal application. If the implement operation control device, the tractor operation control device, the telematics device, or the terminal application determines, from processing or analyzing the switching state signal received, that the switching has been accomplished by the actuator of the top link assembly, the stop signal can be generated and sent to the operation control device of the top link assembly.

The actuator sensor device may comprise at least one sensor of a sensor type selected from the following group: a position sensor configured to generate sensor signals indicative of a position of the actuator; an inclination sensor configured to generate sensor signals indicative of an angle of inclination of the actuator; an extension sensor configured to generate sensor signals indicative of an extension or length of the actuator; a force sensor configured to generate sensor signals indicative of at least one of a force exerted on an internal component of the actuator, and a force exerted by the actuator for linkage application; and a motion sensor configured to generate sensor signals indicative of a motion of the actuator.

In case the actuator is provided as a hydraulic actuator comprising a hydraulic cylinder, a pressure sensor may be provided which is configured to generate sensor signals indicative of at least one of an internal pressure inside a fluid chamber of the hydraulic cylinder and external pressure provide by the hydraulic cylinder for linkage application.

Depending on a mode of operation performed by the operation control device of the top link assembly, sensor signals from one or more sensors of the different type may be received and processed by the operation control device of the top link assembly. For example, if the request for switching the operation state of the actuator received in the operation control device of the top link assembly defines a length or extension of the actuator of the second operation state, sensor signals indicating the extension or length of the actuator such as a hydraulic cylinder may be received and processed by the operation control device. In some other embodiment, if the request for switching the operation state of the actuator received in the operation control device of the top link assembly is defining some internal or external pressure of the second operation state, pressure sensor signals may be received and processed by the operation control device of the top link assembly.

Sensor signals from one sensor or from two or more sensors of different type may be provided continuously to the operation control device.

In some embodiment, a signal may be derived from a machine deep learning model that provides optimal control actions based on learned patterns and input conditions.

The actuator control device may be operable to connect to a power supply system of at least one of a tractor and an implement for receiving power supply. The operation control device may be further operable to generate a power supply request signal indicating request for receiving power supply to the actuator, and provide the power supply request signal to the operation control device output.

For example, the actuator may be extended or retracted, thereby, adjusting, for example, length of the actuator.

In case of a hydraulic actuator, flow of the hydraulic fluid from the hydraulic supply system to the hydraulic flow system of the top link assembly and flow back from the hydraulic flow system of the top link assembly to the hydraulic supply system is applied to switch the operation state of the hydraulic cylinder.

The power supply system provided, for example, on the tractor and / or the implement may be operable to continuously provide power supply to the actuator control device of the top link assembly.

In some embodiments, the operation control device of the top link assembly may be operable to request power supply from the power supply system on demand. For example, such power supply on demand may be started in response to receiving the request for switching the operation state of the actuator in the operation control device. The request for power supply such as flow of hydraulic fluid may be sent by the operation control device of the top link assembly through the operation control device output via the data bus to the hydraulic supply system of the tractor and / or the implement.

The operation control device may further be operable to (i) receive an external sensor signal from an external sensor operable to detect measurement values for one or more operation parameters of at least one of an agricultural machine, a tractor, and an implement; and (ii) control operation of the actuator control device for switching of the actuator such as a hydraulic cylinder from the first operation state to the second operation state in dependence on the external sensor signal.

In some embodiment, the external sensor is provided on the tractor or the implement attached by the implement linkage. The external sensor may be operable to detect an environmental condition while operating the agricultural machine comprising the top link assembly. For example, because of starting rain some condition of the ground may change. In response to such finding from sensor signals, the operation state of the actuator may be switched for adjusting height and / or inclination of a working tool of the implement attached by the implementing linkage.

The one or more external sensor signals are received and processed by the operation control device of the top link assembly. In response to such processing, control signals may be generated by the operation control device for controlling operation of the actuator control device, thereby, switching operation state of the actuator of the top link assembly.

The operation control device may further be operable to (i) generate a user output signal for outputting user information through a user interface, and (ii) provide the user output signal to the operation control device output. In some embodiment, the user output signal is indicating at least one of the operation state of the actuator such as hydraulic cylinder, and an operation state parameter of the actuator such as hydraulic cylinder.

The user interface, which, for example, may comprise a user terminal, may be operable to receive user input. The user input may define a request or command for operation of the operation control device of the top link assembly. For example, the user input may prioritize a first request for switching the operation state of the hydraulic cylinder over a second request for switching the operations state of the hydraulic cylinder, both the first and second request received in the operation control device. Thereby, potential conflict between different requests for switching the operation state of the hydraulic cylinder of the top link assembly can be avoided in response to user input. Similarly, the user input may define a request for switching the operation state of the hydraulic cylinder. In some embodiment, the user interface may be provided in the tractor.

As an alternative or in addition, the user interface may be a (graphical) user interface provided on a mobile user device such as at least one of a mobile phone, a tablet, terminal, a telematics device, and a remote server. In some embodiment, the request may be in form of a signal from a joystick, a lever slide bar, a pushbutton, a rotation knob, a microphone and / or associated speech recognition software.

The user interface may be provided in the tractor. In some embodiment, the user terminal may be implemented on a mobile user device, such as a mobile phone.

In some embodiment, the tractor may comprise a Tractor Implement Management (TIM) control unit known as such in different type. A TIM system enables interaction with electro-mechanical units of the tractor to control various functions such as speed, start and stop, and steering based on signals from the attached implement. Using the ISOBUS-based protocol, the TIM system facilitates communication between the tractor and the implement, allowing the implement to manage certain tractor functions. Essentially, the implement's electronic control device / unit (ECU) communicates with the tractor through the TIM message protocol. In TIM systems the control of TIM functions is done by tractor control system.

With respect to the implement linkage for attaching an implement, and the agricultural machine, one or more of the different embodiments disclosed above may apply *mutatis mutandis.*

The agricultural machine is to execute some kind of agricultural work. Components of the agricultural machine may be connected to each other mechanically, electrically and / or wirelessly. Electronic information between the components of the agricultural machine may be exchanged via at least one of a physical communication channel and a wireless communication channel. The agricultural machine may comprise a vehicle, and an implement linked to the vehicle by the implement linkage, wherein the operation control device of the top link assembly is functionally connected to at least one of electronic components of the agricultural machine able to generate control signals.

An agricultural machine system may be provided comprising, in addition to the agricultural machine having the vehicle and the implement, at least one of the following: an additional implement linked to the vehicle by the implement linkage, an additional implement linked to an implement by the implement linkage, an additional vehicle, an implement operation control device, a terminal, a terminal application, a task controller, a vehicle operation control device, an external sensor system, a phone, a tablet, a cloud application, a cloud connectivity device, a drone, a network controller, a telematics device, a playback device, and a camera system. Other components being part of the agricultural machine system while it is executing agricultural work may be provided.

The implement linkage for attaching the implement may be a three-point linkage or a trailer hook. For this and other embodiments, the implement linkage may be provided on a tractor or an implement different from the implement to be attached by the implement linkage.

In some embodiment, the agricultural machine may comprise the tractor, and the implement linked or attached to the tractor by the implement linkage, wherein the operation control device of the top link assembly is functionally connected to at least one of a tractor operation control device of the tractor, an implement operation control device of the implement, a telematics device, and a terminal application through a data bus.

### Description of further embodiments

Following, further embodiments are described by referring to figures. In the figures, show:
- Fig. 1: a schematic representation of an agricultural machine comprising a tractor and an implement attached to the tractor by an implement linkage;
- Fig. 2: a schematic representation of a top link assembly;
- Fig. 3: a schematic representation of a first mode of operation of a top link assembly;
- Fig. 4: a schematic representation of a second mode of operation of a top link assembly;
- Fig. 5: a schematic representation of a third method of operation of a top link assembly; and
- Fig. 6: a schematic representation of a fourth mode of operation of a top link assembly.

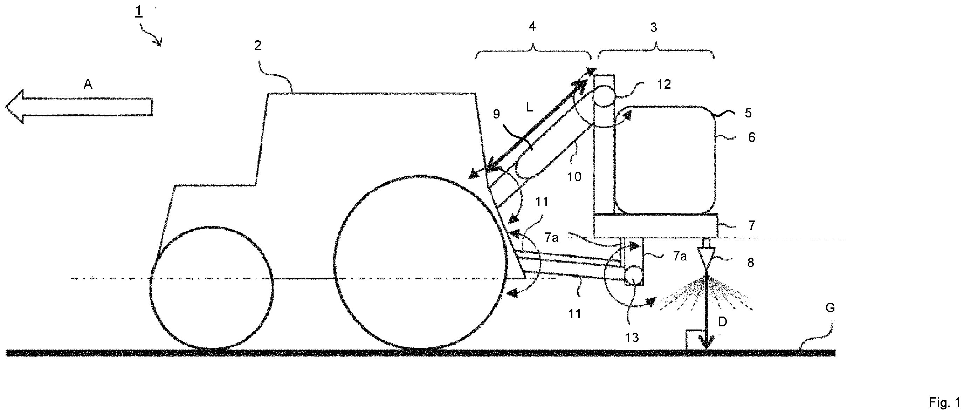

Fig. 1 shows a schematic representation of an agricultural machine 1 which may also be referred to as agricultural machine system comprising a tractor 2 and an implement 3 attached to the tractor2 by an implement linkage 4. In Fig. 1, as an example, the implement 3 is provided with an agricultural sprayer 5 comprising a tank 6 for receiving some spraying fluid, an implement frame 7 configured to receive and hold the tank 6, and a spraying device 8 for spraying the spraying fluid to the ground G.

The implement linkage 4, in the example shown, comprises a three-point linkage 9. Different types of three-point linkage are known as such. A top link 10, and two lower links 11 on opposite sides are provided. The top link 10 may comprise, for example, a hydraulic cylinder, and a length L of the top link 10 can be controlled as it is described in further detail below.

Without limitation, some embodiments are described by referring to the top link 10 comprising a hydraulic cylinder (hydraulic actuator). In other embodiments providing for similar functionality in the top link 10, one of an electric and a pneumatic actuator may be provided.

The lower links 11 are supported by, for example, a supporting mechanism (not shown) that is extendable or retractable by means of a hydraulic mechanism, such as a lift rode. In a case a length of the lift rode is adjusted, it is possible to maintain an angle of the lower links 11 at a desired angle by rotating the lower links 11. Thus, a height of the implement 3 which is supported by the lower links 11 is controlled.

The top link 10 is pivotably connected to the implement frame 7 in a top link connection section 12. On the opposite side of the top link 10, the top link 10 is pivotably connected to the tractor 2. The lower links 11 are pivotably connected to vertical implement frame members 7a in a lower link connecting section 13.

In the example shown in Fig. 1, by adjusting the length L of the top link 10, a position of the implement 3 relative to the tractor 2 and the ground G can be adjusted. For example, if the length L of the top link 10 is extended, an angle of inclination of the implement frame 7 and the tank 6 will be changed. At the same time, a distance D between a lower tip of the spraying device 8 and the ground G will change. Similarly, the angle of inclination of the implement 3, and the distance D will be adjusted, if the length L of the top link 10 is shortened, for example, by retracting an hydraulic cylinder of the top link 10. Thus, switching the top link 10 between different operation states characterized by different operation state parameters, such as length and / or angle, allows for controlling of an operation condition of the implement 3 which, according to the example shown, is provided with the spraying device 6. Other types of agricultural implement may be attached to the tractor 2 similarly by the implement linkage 4.

Following, further details with regard to design and operation of the top link 10 are described.

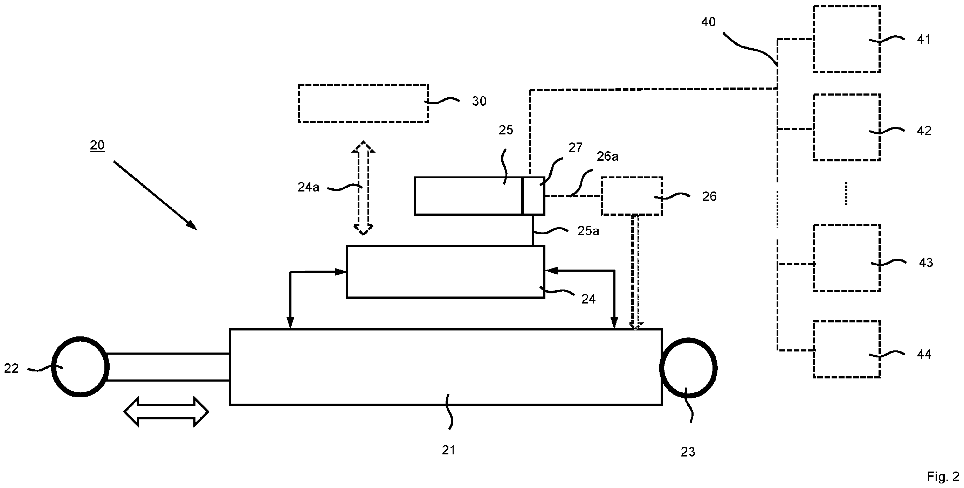

Fig. 2 shows a top link assembly 20 which may provide for the top link 10 of the implement linkage 4. The top link assembly 20 is a stand-alone top link device for the implement linkage 4 for attaching the implement 3 to the tractor 2 in the agricultural machine 1. According to Fig. 2, in the embodiment shown, the top link assembly 20 comprises a hydraulic cylinder 21 which is extendable and retractable, thereby, adjusting length or extension of the hydraulic cylinder 21. Connecting sections 22, 23 on opposite sides of the hydraulic cylinder 21 are configured to pivotably connect the hydraulic cylinder 21 for mounting the top link assembly 20 in the implement linkage 4.

The hydraulic cylinder 21 is assigned a hydraulic flow system 24 providing for an actuator control device and being configured to provide controlled flow of a hydraulic fluid into and out of the hydraulic cylinder 21. The hydraulic flow system 24 is connectable, through a hydraulic connection 24a, to a hydraulic supply system 30 which, for example, may be provided on the tractor 2. The hydraulic supply system 30 may be configured to continuously provide flow of the hydraulic fluid and / or flow of the hydraulic fluid on demand. For example, by receiving flow of the hydraulic fluid from the hydraulic supply system 30, the hydraulic flow system 24 of the top link assembly 20 may be operable to increase relative pressure in a bottom chamber of the hydraulic cylinder 21 to extend the hydraulic cylinder 21. Similarly, an increased relative pressure of a piston rod side chamber of the hydraulic cylinder 21 may be applied via the hydraulic flow system 24 resulting in operation of the hydraulic cylinder 21 for retracting.

In an alternative embodiment, the hydraulic actuator, namely the hydraulic cylinder 21, may be substituted by one of an electric actuator such as an electric motor, and a pneumatic actuator such as a pneumatic cylinder. Depending on the type of actuator, the actuator control device such as the hydraulic flow system 24 may comprise at least one of one or more hydraulic valves in case of the hydraulic actuator, a solenoid, an electric motor driver in case of the electric actuator, and one or more pneumatic valves in case of the pneumatic actuator.

Further, the top link assembly 20 comprises an operation control device 25 functionally connected to the hydraulic flow system 24 by a functional connection 25a for controlling operation of the hydraulic flow system 24, thereby, controlling operation of the hydraulic cylinder 21 for extending and retracting, thereby, switching between different operations states of the hydraulic cylinder 21.

The operation control device 25 may be connected to a data bus 40 to which other devices are also connected, such as at least one of a tractor operation control device 41, an implement operation control device 42, and a terminal application 43. Through the data bus 40 the operation control device 25 of the top link assembly 20 may receive control signals or commands configured to control operation of the top link assembly 20.

The tractor operation control device 41 may be provided on the tractor 2 and may be configured to control one or more operation functions of the tractor 2. The tractor operation control device 41 may be connected to a terminal device configured to, for example by a terminal application, receive user input, and to output user information, such as video and / or audio data. Also, a haptic response may be provided to a user, for example, by a joystick provided in the tractor. The joystick may also allow for user input.

In response to user input, the tractor operation control device 41 may send a request for switching the operation state of the hydraulic cylinder 21 to the operation control device 25 through the data bus 40. In response to such control signal (defining request), the operation control device 25 can control operation of the hydraulic flow system 24 for adjusting the operation state of the hydraulic cylinder 21, thereby, controlling operation of the top link assembly 20 in response to the control signal received from the tractor operation control device 41. Similarly, a control signal may be received from one of the implement operation control device 42, the terminal application 43, and a telematics device 44 in the operation control device 25.

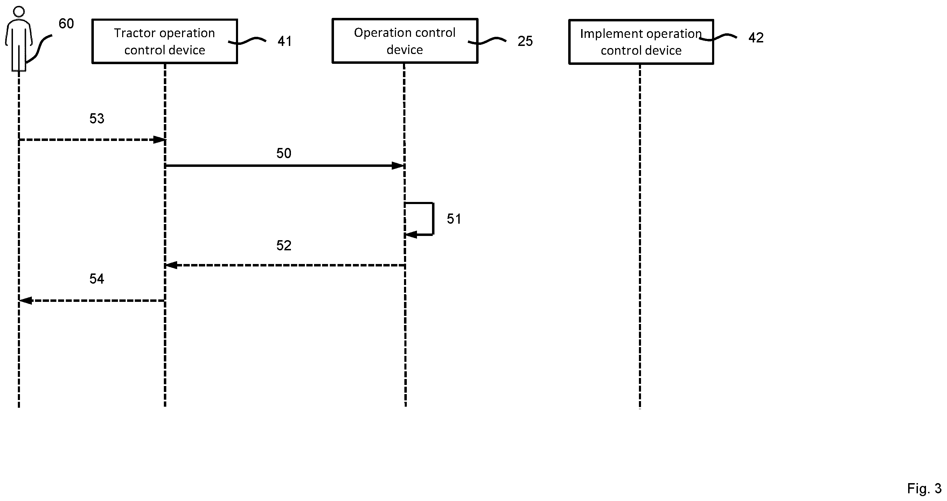

Following, different modes of operation of the top link assembly 20 are described by referring to Fig. 3 to 6.

Referring to Fig. 3, the top link assembly 20 is operable according to a first mode of operation. The tractor operation control device 41 is generating a control signal defining a request or command for switching the hydraulic cylinder 21 (electronic operation state setting signal) from a first operation state to a second operation state which may also be referred to as target operation state or position and which is different from the first operation state (step 50). In an example, the request or command for switching may be provided in response to a request received via a user interface. For example, the first and second operation state may be characterized by different length of the hydraulic cylinder 21. In addition, or as an alternative, the first and second operation state may be different with respect to an angle of inclination of the hydraulic cylinder 21 in the implement linkage 4, a special position of the hydraulic cylinder 21 in the implement linkage 4, and / or a pressure internally provided within a cylinder chamber of the hydraulic cylinder 21.

The request sent from the tractor operation control device 41 to the operation control device 25 may indicate or define at least one of the second operation state and one or more operation state parameters characterizing the second operation state.

In response to receiving the request, the operation control device 25 is switching the hydraulic cylinder 21 from the first operation state to the second operation state in step 51. Such switching is performed by the operation control device 25 controlling the hydraulic flow system 24, thereby, controlling flow of the hydraulic fluid into and out of the hydraulic cylinder 21.

There are optional steps with respect to the first mode of operation according to Fig. 3. In a step 52 the operation control device 25 may provide an information signal to the tractor operation control device 41, the information signal indicating that switching of the hydraulic cylinder 21 from the first to the second operation state being accomplished.

The electronic operation state setting signal comprising the request for switching the hydraulic cylinder 21 between the operation states (see step 50) may be generated in the tractor operation control device 41 in response to receiving user input from a user 60 (step 53), for example, through a terminal input device provided in the tractor 2. In such scenario, the tractor operation control device 41 may generate a user information signal output to the user 60 in step 54 in response to receiving the information signal from the operation control device 25 in step 52.

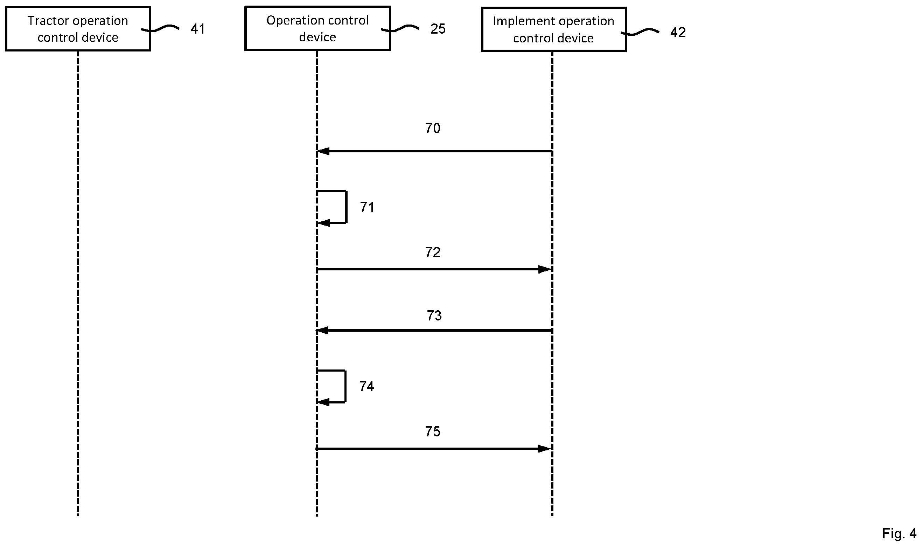

Referring to Fig. 4, the top link assembly 20 may be operated according to a second mode of operation. In step 70, an electronic operation state setting signal generated and sent by the implement operation control device 42 is received in the operation control device 25 of the top link assembly 20. The electronic operation control setting signal defines a request for switching the hydraulic cylinder 21 from the first to the second operation state. In response to receiving the electronic operation control setting signal, the operation control device 25 is controlling operation of the hydraulic cylinder 21 for switching from the first to the second operation state.

By utilizing the electronic operation state setting signal generated and sent by the implement operation control device 42, the top link assembly 20 can predict and / or respond to changes more swiftly, reducing lag time and improving overall performance.

The switching process is continuously monitored by the operation control device 25, for example, by receiving measurement signals from a sensor device 26 assigned to the hydraulic cylinder 21 and functionally connected to an operation control device input / output 27 of the operation control device 25 by a functional connection 26a (step 71). While the switching process is still going on, the operation control device 25 is generating a switching state signal indicating a current operation state and / or a current operation state parameter for the hydraulic cylinder 21. The switching state signal is sent from the operation control device 25 to the implement operation control device 42 in step 72, thereby, informing the implement operation control device 42 on the current switching status of the hydraulic cylinder 21. In response, the implement operation control device 42 may send a request for continuing the switching process (step 73). In response to such signal, the operation control device 25 will continue with controlling switching of the operation state of the hydraulic cylinder 21 (step 74), and will send another switching state signal in step 75 to the implement operation control device 42 indicative of the further amended operation state of the hydraulic cylinder 21. If the implement operation control device 42 determines that the operation state indicated in the further switching state signal is matching the request sent by the implement operation control device 42 before (i.e., electronic operation state setting signal), no further request for continuing switching is sent by the implement operation control device 42 to the operation control device 25. Switching from the first to the second operation state has been accomplished for the hydraulic cylinder 21 of the top link assembly 20 by means of the hydraulic flow system 24.

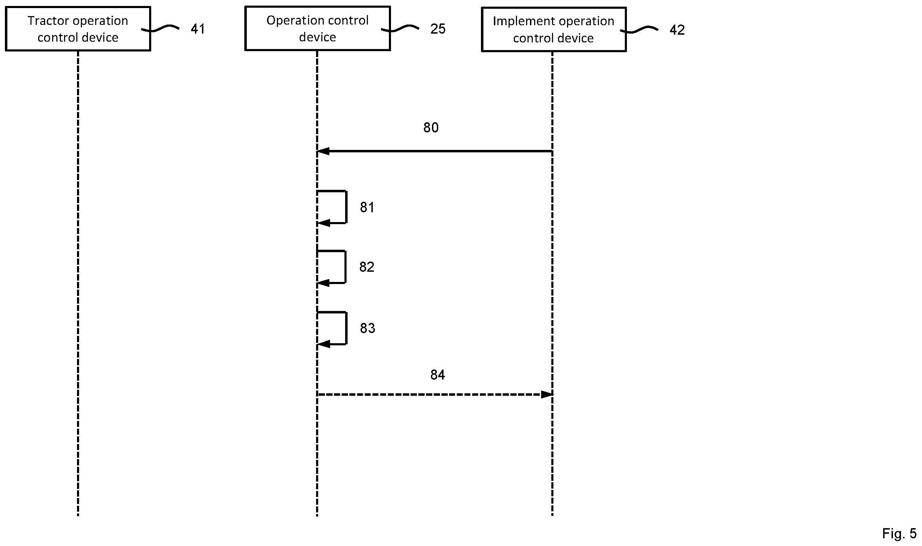

Referring to Fig. 5, the top link assembly 20 may be operated according to a third method of operation. In step 80, an electronic operation control setting signal is received from the implement operation control device 42 in the operation control device 25 of the top link assembly 20. The electronic operation control setting signal comprises a request for switching the hydraulic cylinder 21 from the first to the second operation state. In response, the operation control device 25 is controlling switching of the hydraulic cylinder 21. In steps 81, 82, 83 the switching process is continuously monitored by the operation control device 25, for example, by receiving measurement signal from the sensor device 26, wherein the measurement signals are indicative of one or more operation state parameters characterizing the operation state of the hydraulic cylinder 21. As an option, in step 84 an information signal may be generated by the operation control device 25 and sent to the implement operation control device 42, wherein the information signal is indicating that the operation state of the hydraulic cylinder 21 of the top link assembly 20 being switched from the first to the second operation state as requested by the electronic operation setting signal received in step 80 before.

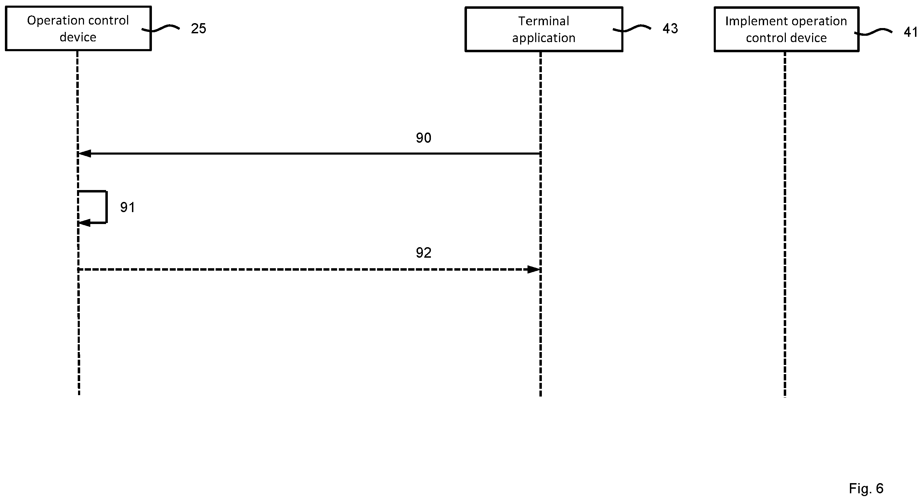

Referring to Fig. 6, the top link assembly 20 may be operated according to a fourth operation mode. In step 90, an electronic operation control setting signal is received from the terminal application 43 through the data bus 40 by the operation control device 25 of the top link assembly 20. The electronic operation control setting signal is indicating a request for switching the operation state of the hydraulic cylinder 21 from the first to the second operation state. In response to receiving the electronic operation control setting signal, the operation control device 25 is controlling the switching process for the hydraulic cylinder 21 in step 91. Optionally, in step 92 an information signal may be generated by the operation control device 25 and sent to the terminal application 43, wherein the information signal is indicating that switching from the first to the second operation state as requested by the electronic operation control setting signal has been conducted.

The features disclosed in this specification, the figures and / or the claims may be material for the realization of various embodiments, taken in isolation or in various combinations thereof.

## Claims

1. A top link assembly (20) for an implement linkage (4) for attaching an implement (3), comprising:
- an actuator (21) switchable between a first operation state and a second operation state from a plurality of operation states, wherein
- the first operation state is **characterized by** at least one first operation state parameter,
- the second operation state being different from the first operation state is **characterized by** at least one first operation state parameter, and
- the at least one second operation state parameter is different from the at least one first operation state parameter;
- an actuator control device (24) configured to control power supply to the actuator (21); and
- an operation control device (25) having an operation control device input (27) for receiving electronic signals and an operation control device output (27) for sending electronic signals, wherein the operation control device (25) is operable to
- receive an electronic operation state setting signal through the operation control device input (27), the electronic operation state setting signal comprising a request for switching the actuator (21) to the second operation state, and
- in response to the request for switching the actuator (21), control operation of the actuator control device (24) for switching of the actuator (21) from the first operation state to the second operation state.

2. The top link assembly (20) of claim 1, **characterized in that** the operation control device (25) is further operable to receive the electronic operation state setting signal from at least one of an implement operation control device (42) of an implement (3), a tractor operation control device (41) of a tractor (2), a telematics device (44), and a terminal application (43), wherein the at least one second operation state parameter is defined by at least one of the implement operation control device (42), the tractor operation control device (41), the telematics device (44), and the terminal application (43).

3. The top link assembly (20) of claim 1 or 2, **characterized in that** the at least one first operation state parameter and the at least one second operation state parameter are of an operation state parameter type selected from the following group: position of the actuator (21), extension of the actuator (21), motion of the actuator (21), angle of inclination of the actuator (21), internal force of an actuator component, internal pressure of a cylinder chamber, force externally provided by the actuator (21), and pressure externally provided by the actuator (21).

4. The top link assembly (20) of at least one of the preceding claims, **characterized in that** the at least one first operation state parameter and the at least one second operation state parameter are different with respect to at least one of type of operation state parameter and value of operation state parameter.

5. The top link assembly (20) of at least one of the preceding claims, **characterized in that**
- an actuator sensor device (26) is provided, the actuator sensor device (26) being assigned to the actuator (21) and operable to generate a sensor signal indicating a second operation state parameter value measured for the at least one second operation state parameter; and
- the operation control device (25) is further operable to receive the sensor signals and control operation of the actuator control device (24) for switching of the actuator (21) from the first operation state to the second operation state in dependence on the sensor signals.

6. The top link assembly (20) of claim 5, **characterized in that** the operation control device (25) is further operable to generate a switching state signal indicating a current second operation state parameter value measured for the at least one second operation state parameter while the switching of the actuator (21) from the first operation state to the second operation state is in progress, and to provide the switching state signal to the operation control device output (27).

7. The top link assembly (20) of claims 2 and 6, **characterized in that** the operation control device (25) is further operable to
- send the switching state signal, through the operation control device output (27), to at least one of the implement operation control device (42), the tractor operation control device (41), the telematics device (44), and the terminal application (43);
- receive a stop signal from at least one of the implement operation control device (42), the tractor operation control device (41), the telematics device (44), and the terminal application (43) through the operation control device input (27); and
- stop switching of the actuator (21) in response to receiving the stop signal.

8. The top link assembly (20) of at least one of claims 5 to 7, **characterized in that** the actuator sensor device is comprising at least one sensor of a sensor type selected from the following group:
- a position sensor configured to generate sensor signals indicative of a position of the actuator (21);
- an inclination sensor configured to generate sensor signals indicative of an angle of inclination of the actuator (21);
- an extension sensor configured to generate sensor signals indicative of an extension of the actuator (21);
- a force sensor configured to generate sensor signals indicative of at least one of a force exerted on an internal component of the actuator (21), and a force exerted by the actuator (21) for linkage application; and
- a motion sensor configured to generate sensor signals indicative of a motion of the actuator (21).

9. The top link assembly (20) of at least one of the preceding claims, **characterized in that**
- the actuator control device (24) is operable to connect to a power supply system of at least one of a tractor and an implement for receiving power supply; and
- the operation control device (25) is further operable to generate a power supply request signal indicating request for receiving power supply to the actuator (21), and provide the power supply request signal to the operation control device output (27).

10. The top link assembly (20) of at least one of the preceding claims, **characterized in that** the operation control device (25) is further operable to
- receive an external sensor signal from an external sensor operable to detect measurement values for one or more operation parameters of at least one of an agricultural machine, a tractor, and an implement; and
- control operation of the actuator control device (24) for switching of the actuator (21) from the first operation state to the second operation state in dependence on the external sensor signal.

11. The top link assembly (20) of at least one of the preceding claims, **characterized in that** the operation control device (25) is further operable to
- generate a user output signal for outputting user information through a user interface; and
- provide the user output signal to the operation control device output (27).

12. An implement linkage (4) for attaching an implement (3), comprising the top link assembly (20) of at least one of the preceding claims.

13. An agricultural machine, comprising the implement linkage (4) of claim 12.

14. The agricultural machine of claim 13, comprising a tractor (2), and an implement (3) linked to the tractor (2) by the implement linkage (4), wherein the operation control device (25) of the top link assembly (20) is functionally connected to at least one of a tractor operation control device (41), an implement operation control device (42), a telematics device (44), and a terminal application (43) through a data bus (40).

15. A method for operating a top link assembly (20) of an implement linkage (4) for attaching an implement (3), the method comprising:
- providing an actuator (21) switchable between a first operation state and a second operation state from a plurality of operations states, wherein
- the first operation state is **characterized by** at least one first operation state parameter,
- the second operation state being different from the first operation state is **characterized by** at least one first operation state parameter, and
- the at least one second operation state parameter is different from the at least one first operation state parameter;
- providing an actuator control device (24) configured to control power supply to the actuator (21); and
- providing an operation control device (25) having an operation control device input (27) for receiving electronic signals and an operation control device output (27) for sending electronic signals;
wherein the method further comprises
- receiving an electronic operation state setting signal through the operation control device input (27) in the operation control device (25), the electronic operation state setting signal comprising a request for switching the actuator (21) to the second operation state, and
- in response to the request for switching the actuator (21), controlling operation of the actuator control device (24) for switching of the actuator (21) from the first operation state to the second operation state.

## Amended claims

### Amended claims in accordance with Rule 137(2) EPC.

1. A top link assembly (20) for an implement linkage (4) for attaching an implement (3), comprising:
- an actuator (21) switchable between a first operation state and a second operation state from a plurality of operation states, wherein
- the first operation state is **characterized by** at least one first operation state parameter,
- the second operation state being different from the first operation state is **characterized by** at least one second operation state parameter, and
- the at least one second operation state parameter is different from the at least one first operation state parameter;
- an actuator control device (24) configured to control power supply to the actuator (21); and
- an operation control device (25) having an operation control device input (27) for receiving electronic signals and an operation control device output (27) for sending electronic signals, wherein the operation control device (25) is operable to
- receive an electronic operation state setting signal through the operation control device input (27), the electronic operation state setting signal comprising a request for switching the actuator (21) to the second operation state, and
- in response to the request for switching the actuator (21), control operation of the actuator control device (24) for switching of the actuator (21) from the first operation state to the second operation state.

2. The top link assembly (20) of claim 1, **characterized in that** the operation control device (25) is further operable to receive the electronic operation state setting signal from at least one of an implement operation control device (42) of an implement (3), a tractor operation control device (41) of a tractor (2), a telematics device (44), and a terminal application (43), wherein the at least one second operation state parameter is defined by at least one of the implement operation control device (42), the tractor operation control device (41), the telematics device (44), and the terminal application (43).

3. The top link assembly (20) of claim 1 or 2, **characterized in that** the at least one first operation state parameter and the at least one second operation state parameter are of an operation state parameter type selected from the following group: position of the actuator (21), extension of the actuator (21), motion of the actuator (21), angle of inclination of the actuator (21), internal force of an actuator component, internal pressure of a cylinder chamber, force externally provided by the actuator (21), and pressure externally provided by the actuator (21).

4. The top link assembly (20) of at least one of the preceding claims, **characterized in that** the at least one first operation state parameter and the at least one second operation state parameter are different with respect to at least one of type of operation state parameter and value of operation state parameter.

5. The top link assembly (20) of at least one of the preceding claims, **characterized in that**
- an actuator sensor device (26) is provided, the actuator sensor device (26) being assigned to the actuator (21) and operable to generate a sensor signal indicating a second operation state parameter value measured for the at least one second operation state parameter; and
- the operation control device (25) is further operable to receive the sensor signals and control operation of the actuator control device (24) for switching of the actuator (21) from the first operation state to the second operation state in dependence on the sensor signals.

6. The top link assembly (20) of claim 5, **characterized in that** the operation control device (25) is further operable to generate a switching state signal indicating a current second operation state parameter value measured for the at least one second operation state parameter while the switching of the actuator (21) from the first operation state to the second operation state is in progress, and to provide the switching state signal to the operation control device output (27).

7. The top link assembly (20) of claims 2 and 6, **characterized in that** the operation control device (25) is further operable to
- send the switching state signal, through the operation control device output (27), to at least one of the implement operation control device (42), the tractor operation control device (41), the telematics device (44), and the terminal application (43);
- receive a stop signal from at least one of the implement operation control device (42), the tractor operation control device (41), the telematics device (44), and the terminal application (43) through the operation control device input (27); and
- stop switching of the actuator (21) in response to receiving the stop signal.

8. The top link assembly (20) of at least one of claims 5 to 7, **characterized in that** the actuator sensor device is comprising at least one sensor of a sensor type selected from the following group:
- a position sensor configured to generate sensor signals indicative of a position of the actuator (21);
- an inclination sensor configured to generate sensor signals indicative of an angle of inclination of the actuator (21);
- an extension sensor configured to generate sensor signals indicative of an extension of the actuator (21);
- a force sensor configured to generate sensor signals indicative of at least one of a force exerted on an internal component of the actuator (21), and a force exerted by the actuator (21) for linkage application; and
- a motion sensor configured to generate sensor signals indicative of a motion of the actuator (21).

9. The top link assembly (20) of at least one of the preceding claims, **characterized in that**
- the actuator control device (24) is operable to connect to a power supply system of at least one of a tractor and an implement for receiving power supply; and
- the operation control device (25) is further operable to generate a power supply request signal indicating request for receiving power supply to the actuator (21), and provide the power supply request signal to the operation control device output (27).

10. The top link assembly (20) of at least one of the preceding claims, **characterized in that** the operation control device (25) is further operable to
- receive an external sensor signal from an external sensor operable to detect measurement values for one or more operation parameters of at least one of an agricultural machine, a tractor, and an implement; and
- control operation of the actuator control device (24) for switching of the actuator (21) from the first operation state to the second operation state in dependence on the external sensor signal.

11. The top link assembly (20) of at least one of the preceding claims, **characterized in that** the operation control device (25) is further operable to
- generate a user output signal for outputting user information through a user interface; and
- provide the user output signal to the operation control device output (27).

12. An implement linkage (4) for attaching an implement (3), comprising the top link assembly (20) of at least one of the preceding claims.

13. An agricultural machine, comprising the implement linkage (4) of claim 12.

14. The agricultural machine of claim 13, comprising a tractor (2), and an implement (3) linked to the tractor (2) by the implement linkage (4), wherein the operation control device (25) of the top link assembly (20) is functionally connected to at least one of a tractor operation control device (41), an implement operation control device (42), a telematics device (44), and a terminal application (43) through a data bus (40).

15. A method for operating a top link assembly (20) of an implement linkage (4) for attaching an implement (3), the method comprising:
- providing an actuator (21) switchable between a first operation state and a second operation state from a plurality of operations states, wherein
- the first operation state is **characterized by** at least one first operation state parameter,
- the second operation state being different from the first operation state is **characterized by** at least one second operation state parameter, and
- the at least one second operation state parameter is different from the at least one first operation state parameter;
- providing an actuator control device (24) configured to control power supply to the actuator (21); and
- providing an operation control device (25) having an operation control device input (27) for receiving electronic signals and an operation control device output (27) for sending electronic signals;
wherein the method further comprises
- receiving an electronic operation state setting signal through the operation control device input (27) in the operation control device (25), the electronic operation state setting signal comprising a request for switching the actuator (21) to the second operation state, and
- in response to the request for switching the actuator (21), controlling operation of the actuator control device (24) for switching of the actuator (21) from the first operation state to the second operation state.
